# FASCICULE DE BREVET EUROPEEN

(11) **EP 3 995 723 B1**
(45) Date de publication et mention de la délivrance du brevet: **02.08.2023**
(21) Numéro de dépôt: 21200395.8
(22) Date de dépôt: 01.10.2021
(51) Int. Cl.: F16K 1/52, F16K 21/10

(54) **MECANISME A FERMETURE AUTOMATIQUE TEMPORISEE POUR ROBINET, ET ROBINET LE COMPRENANT**
ZEITGESTEUERTER AUTOMATISCHER SCHLIESSMECHANISMUS FÜR EINEN HAHN UND EINEN DIESEN MECHANISMUS UMFASSENDEN HAHN
MECHANISM WITH AUTOMATIC TIMED LOCKING FOR VALVE, AND VALVE COMPRISING SAME

(30) Priorité: 10.11.2020 FR 2011565
(43) Date de publication de la demande: 11.05.2022
(73) Titulaire: Delabie, 80130 Friville Escarbotin (FR)
(72) Inventeur: DARRAS, Maxime, 80130 FRIVILLE-ESCARBOTIN (FR); CORDIER, Ludovic, 80130 Friville-Escarbotin (FR)
(74) Mandataire: Cabinet Chaillot

(56) Documents cités:
- EP-A1- 3 851 719
- AU-A4- 2005 100 563
- CN-Y- 2 733 129
- FR-A1- 2 628 817
- FR-A1- 2 657 410
- FR-A1- 2 734 334
- FR-A1- 2 844 021

## Description

La présente invention concerne le domaine des robinets, et porte en particulier sur un mécanisme à fermeture automatique temporisée pour un robinet, tel qu'un robinet pour douche, lavabo ou urinoir, et sur un robinet pour douche, lavabo ou urinoir intégrant un tel mécanisme.

Les robinets existants pour douche, lavabo ou urinoir comprennent généralement, d'une part, un corps de forme sensiblement cylindrique dans lequel débouche une arrivée d'eau et depuis lequel s'étend une sortie d'eau, et, d'autre part, un mécanisme en forme de cartouche, appelé par simplification dans ce qui suit cartouche, qui est inséré dans ce corps. Cette cartouche, amovible et interchangeable, est le plus souvent surmontée d'un bouton de commande, de type bouton-poussoir, pour déclencher la sortie d'eau pendant un temps prédéterminé, l'ouverture du robinet étant obtenue en exerçant une poussée sur le bouton de commande et la fermeture du robinet se produisant automatiquement au bout d'une certaine durée après que l'appui sur le bouton de commande a été relâché.

Un robinet à fermeture automatique est décrit dans la demande de brevet français FR2547013A1. Ce robinet comporte, à l'intérieur de celui-ci, une cartouche comprenant une tige de commande creuse dont l'extrémité supérieure est solidaire d'un bouton de commande et dont la partie inférieure porte un clapet, le clapet du robinet s'ouvrant lorsqu'un utilisateur appuie sur le bouton de commande et se refermant lorsque la poussée sur le bouton poussoir est relâchée par l'utilisateur, une vis de réglage de débit étant montée à l'intérieur de la tige de commande creuse. Cependant, la fermeture automatique de ce robinet est quasiment instantanée, et ce robinet ne permet donc pas une temporisation précise de l'écoulement d'eau en sortie du robinet.

Un robinet à fermeture automatique temporisée est décrit dans la demande de brevet français FR2497555A1. Ce robinet comporte, à l'intérieur de celui-ci, une cartouche comprenant une tige de commande dont l'extrémité supérieure est solidaire d'un bouton de commande et dont la partie inférieure porte un clapet et un piston de temporisation portant un joint à lèvre dont la lèvre s'applique sur la surface latérale intérieure d'un pot de temporisation, le clapet du robinet s'ouvrant lorsqu'un utilisateur appuie sur le bouton de commande, et revenant plus ou moins lentement sur le siège du robinet lorsque la poussée sur le bouton poussoir est relâchée par l'utilisateur. Cependant, ce robinet ne permet pas un réglage du débit de fluide en sortie du robinet, et ne permet pas un montage facile du piston de temporisation sur la tige de commande. FR2657410A1 et FR2628817A1 décrivent d'autres mécanismes de fermeture selon l'état antérieur de la technique.

La présente invention vise à résoudre les inconvénients de l'état antérieur de la technique, en proposant un mécanisme à fermeture automatique temporisée pour un robinet, tel qu'un robinet pour douche, lavabo ou urinoir, permettant à la fois un montage aisé du piston de temporisation sur la tige de commande et un réglage fin du débit de fluide en sortie du robinet.

La présente invention a donc pour objet un mécanisme à fermeture automatique temporisée pour un robinet, tel qu'un robinet pour douche, lavabo ou urinoir, caractérisé par le fait qu'il comprend : - un boîtier cylindrique creux à l'intérieur duquel est apte à coulisser axialement une tige de commande creuse, l'extrémité supérieure de la tige de commande étant solidaire d'un bouton de commande de robinet, la partie inférieure de la tige de commande débouchant du boîtier cylindrique creux et portant un clapet associé à un siège constitué par la partie inférieure du boîtier cylindrique creux, le retour du clapet sur son siège étant provoqué par un ressort de compression disposé entre le boîtier cylindrique creux et le bouton de commande de robinet, la tige de commande creuse possédant, en aval du clapet, au moins deux canaux radiaux d'entrée de fluide et au moins un canal radial de sortie de fluide, un premier joint à lèvre étant disposé entre le boîtier cylindrique creux et la tige de commande, ledit premier joint à lèvre étant situé en aval des au moins deux canaux d'entrée de fluide et en amont de l'au moins un canal de sortie de fluide ; - un pot de temporisation dont la partie supérieure est emboîtée sur la partie inférieure du boîtier cylindrique creux et reliée de manière fluidique à celle-ci, un piston de temporisation qui porte un second joint à lèvre dont la lèvre s'applique sur la surface latérale intérieure du pot de temporisation étant apte à coulisser dans le pot de temporisation, ledit pot de temporisation étant configuré pour être relié à une arrivée de fluide du robinet par l'intermédiaire d'au moins une ouverture d'entrée de fluide ménagée dans le pot de temporisation, la surface latérale intérieure du pot de temporisation comportant une strie longitudinale pour permettre une fuite de fluide calibrée entre la partie du pot de temporisation au-dessous du second joint à lèvre et la partie du pot de temporisation au-dessus du second joint à lèvre lors du déplacement du piston de temporisation, la partie supérieure du piston de temporisation étant insérée dans la partie inférieure de la tige de commande creuse et possédant au moins deux éléments de verrouillage emboîtés dans les au moins deux canaux d'entrée de fluide de la tige de commande, le second joint à lèvre porté par le piston de temporisation comportant une partie supérieure insérée en partie dans une gorge située à la base de la partie supérieure du piston de temporisation, ladite partie supérieure du second joint à lèvre venant au contact de l'extrémité inférieure de la tige de commande pour fermer de manière étanche l'extrémité inférieure de la tige de commande ; - au moins une ouverture de sortie de fluide ménagée dans le boîtier cylindrique creux en aval du premier joint à lèvre et permettant un écoulement de fluide vers une sortie de fluide du robinet ; et - une vis de réglage de débit disposée à l'intérieur de la tige de commande creuse, la partie médiane de ladite vis de réglage de débit comportant une partie conique configurée pour réguler le passage de fluide dans la partie inférieure de la tige de commande creuse de manière à limiter le débit de fluide s'écoulant à travers l'au moins un canal de sortie de fluide.

Ainsi, l'insertion des au moins deux éléments de verrouillage (également appelés clips ou verrous) en partie supérieure du piston de temporisation dans la partie inférieure de la tige de commande creuse, puis l'emboîtement desdits au moins deux éléments de verrouillage dans les au moins deux canaux d'entrée de fluide de la tige de commande permettent de verrouiller le piston de temporisation sur la partie inférieure de la tige de commande, ce qui permet de faciliter le montage du piston de temporisation sur la tige de commande. Lorsque le piston de temporisation est emboîté sur la tige de commande, la partie supérieure du second joint à lèvre porté par le piston de temporisation ferme de manière étanche l'extrémité inférieure de la tige de commande, de telle sorte que, lorsque le clapet du mécanisme est fermé, aucun écoulement de fluide ne se produit dans la tige de commande creuse.

En outre, la partie conique de la vis de réglage de débit située au niveau de l'au moins un canal radial de sortie de fluide de la tige de commande permet un réglage fin du débit de fluide en sortie du robinet par vissage/dévissage de la vis de réglage de débit qui est accessible lorsque le bouton de commande de robinet est démonté.

Dans la position de repos du mécanisme selon la présente invention, aucun appui n'est exercé sur le bouton de commande de robinet, de cette manière la tige de commande est en position haute et le clapet porté par la tige de commande est fermé (clapet en butée contre le siège formé sous le boîtier cylindrique creux), de telle sorte qu'aucun écoulement de fluide ne se produit dans la tige de commande. En outre, en position de repos, le piston de temporisation emboîté sur la tige de commande est en position haute dans le pot de temporisation.

Un appui sur le bouton de commande de robinet entraîne la descente de la tige de commande et l'ouverture du clapet, et entraîne également la descente du piston de temporisation verrouillé sur la tige de commande. Un écoulement de fluide se produit alors depuis l'au moins une ouverture d'entrée de fluide vers l'au moins une ouverture de sortie du fluide du mécanisme, par l'intermédiaire successivement du pot de temporisation, des au moins deux canaux d'entrée de fluide de la tige de commande, de l'intérieur de la tige de commande creuse, et de l'au moins un canal de sortie de fluide de la tige de commande. Ensuite, lorsque l'appui sur le bouton de commande de robinet est relâché, la tige de commande remonte sous l'effet du ressort de rappel, de telle sorte que le piston de temporisation remonte dans le pot de temporisation, en étant freiné par la lèvre du second joint à lèvre, jusqu'à ce que le clapet porté par la tige de commande vienne en butée contre le siège du mécanisme. L'eau s'écoule ainsi jusqu'à ce que le clapet se referme en position haute du piston de temporisation, le mécanisme revenant alors dans sa position de repos.

La strie longitudinale ménagée dans la surface intérieure du pot de temporisation permet une fuite de fluide à la périphérie du second joint à lèvre porté par le piston de temporisation afin de permettre le retour du clapet porté par la tige de commande lorsque la pression sur le bouton de commande est relâchée. La strie longitudinale permet de contrôler la vitesse de déplacement du piston de temporisation dans le pot de temporisation. La vitesse de retour du piston de temporisation est ainsi conditionnée par la vitesse de remplissage du pot de temporisation induite par la section de la strie longitudinale ménagée dans la surface latérale intérieure du pot de temporisation en regard de la lèvre du second joint à lèvre.

Selon une caractéristique particulière de l'invention, l'extrémité inférieure de la vis de réglage de débit pénètre entre les au moins deux éléments de verrouillage du piston de temporisation de manière à empêcher le désengagement des au moins deux éléments de verrouillage et à assurer la solidarité du piston de temporisation avec la tige de commande.

Ainsi, une fois que les au moins deux éléments de verrouillage du piston de temporisation sont emboîtés dans les au moins deux canaux radiaux d'entrée de fluide de la tige de commande, lors du montage de la vis de réglage de débit dans la tige de commande, l'extrémité inférieure (également appelée nez) de la vis de réglage de débit vient s'insérer entre les au moins deux éléments de verrouillage, ce qui permet de maintenir en position emboîtée les éléments de verrouillage et de garantir la fixation du piston de temporisation sur la tige de commande, rendant ainsi le piston inamovible.

Selon une caractéristique particulière de l'invention, chacun des au moins deux éléments de verrouillage est un élément à emboîtage élastique configurée pour se déformer lors de son introduction dans la partie inférieure de la tige de commande creuse et pour revenir ensuite à son état initial non déformé lors de son clipsage dans le canal radial d'entrée de fluide correspondant de la tige de commande creuse.

Selon une caractéristique particulière de l'invention, la tige de commande comprend quatre canaux radiaux d'entrée de fluide, et le piston de temporisation comprend deux éléments de verrouillage emboîtés dans deux canaux opposés parmi les quatre canaux radiaux d'entrée de fluide.

Selon une caractéristique particulière de l'invention, la tige de commande comprend deux canaux radiaux de sortie de fluide.

Selon une caractéristique particulière de l'invention, le siège est constitué par une jupe formée en partie inférieure du boîtier cylindrique creux.

Selon une caractéristique particulière de l'invention, le clapet est un joint torique disposé dans une gorge formée au niveau de la partie inférieure de la tige de commande. Selon une caractéristique particulière de l'invention, le boîtier cylindrique creux est formé en trois parties, à savoir une première partie supérieure dans laquelle sont montées la tige de commande et le ressort de compression, une deuxième partie intermédiaire dans laquelle est formée l'au moins une ouverture de sortie de fluide et dans laquelle est disposé le premier joint à lèvre, et une troisième partie inférieure sur laquelle est formé le siège.

La présente invention a également pour objet un robinet pour douche, lavabo ou urinoir intégrant un mécanisme à fermeture automatique temporisée tel que décrit ci-dessus. Ainsi, le mécanisme à fermeture automatique temporisée selon la présente invention est installé, de manière amovible et interchangeable (de préférence, par vissage), dans un corps de forme généralement cylindrique du robinet. Pour mieux illustrer l'objet de la présente invention, on va en décrire ci-après, à titre illustratif et non limitatif, un mode de réalisation préféré, avec référence aux dessins annexés.

### Sur ces dessins :

[Fig. 1] est une vue en coupe longitudinale d'un mécanisme à fermeture automatique temporisée selon la présente invention, dans la position de repos du mécanisme ;
[Fig. 2] est une vue en coupe longitudinale du mécanisme de la Figure 1 lors d'un appui sur le bouton de commande de robinet du mécanisme.

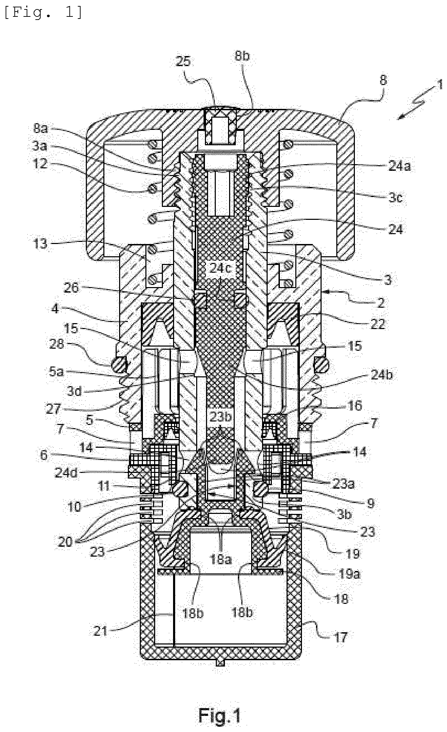

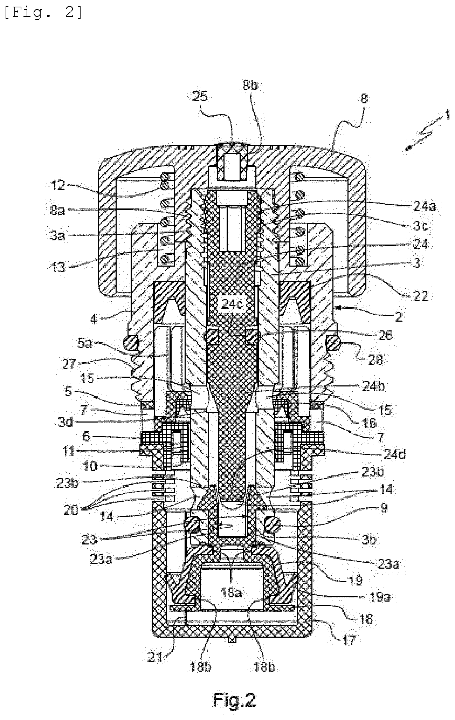

Si l'on se réfère aux Figures 1 et 2, on peut voir qu'il y est représenté un mécanisme à fermeture automatique temporisée 1 selon la présente invention.

Le mécanisme à fermeture automatique temporisée 1 se présente sous la forme d'une cartouche qui est destinée à être installée dans un corps de robinet, tel qu'un robinet pour douche, lavabo ou urinoir.

Le mécanisme à fermeture automatique temporisée 1 comprend un boîtier cylindrique creux 2 à l'intérieur duquel est apte à coulisser axialement une tige de commande creuse 3.

Le boîtier cylindrique creux 2 est formé en trois parties, à savoir une première partie supérieure 4 (également appelée corps de tête) dans laquelle est montée la tige de commande 3, une deuxième partie intermédiaire 5 (également appelée entretoise) dans laquelle sont formées des ouvertures de sortie de fluide 7, et une troisième partie inférieure 6.

Un bouton de commande de robinet 8 est monté sur l'extrémité supérieure de la tige de commande 3, ledit bouton de commande de robinet 8 étant vissé sur l'extrémité supérieure de la tige de commande 3 par l'intermédiaire d'un filetage externe 3a de l'extrémité supérieure de la tige de commande 3 et d'un filetage interne 8a du bouton de commande de robinet 8.

Il est à noter que le bouton de commande de robinet 8 pourrait également être fixé sur la tige de commande 3 par un quelconque autre moyen de fixation connu de l'homme du métier, tel qu'une vis introduite dans un alésage transversal formé dans l'extrémité supérieure de la tige de commande 3.

La partie inférieure de la tige de commande 3 débouche de la troisième partie inférieure 6 du boîtier cylindrique creux 2 et porte un clapet 9 sous forme de joint torique disposé dans une gorge 3b formée au niveau de la partie inférieure de la tige de commande 3.

Le clapet 9 est associé à un siège 10 constitué par l'extrémité inférieure d'une jupe 11 formée dans la troisième partie inférieure 6 du boîtier cylindrique creux 2.

Le retour du clapet 9 sur son siège 10 est provoqué par un ressort de compression 12 disposé entre la première partie supérieure 4 du boîtier cylindrique creux 2 et le bouton de commande de robinet 8, la partie inférieure du ressort de compression 12 étant logée dans un évidement 13 formé en partie supérieure du boîtier cylindrique creux 2.

La tige de commande creuse 3 possède, en aval du clapet 9, quatre canaux radiaux d'entrée de fluide 14 et deux canaux radiaux de sortie de fluide 15.

Il est à noter que la tige de commande creuse 3 pourrait également comprendre au moins deux canaux radiaux d'entrée de fluide 14 et au moins un canal radial de sortie de fluide 15, sans s'écarter du cadre de la présente invention.

Un premier joint à lèvre 16 est disposé contre la deuxième partie intermédiaire 5 de type entretoise du boîtier cylindrique creux 2 de manière à créer une étanchéité entre le boîtier cylindrique creux 2 et la tige de commande 3, ledit premier joint à lèvre 16 étant situé en aval des quatre canaux d'entrée de fluide 14 et en amont des deux canaux de sortie de fluide 15, des ouvertures de sortie de fluide 7 étant ménagées dans la deuxième partie intermédiaire 5 du boîtier cylindrique creux 2 en aval du premier joint à lèvre 16.

Le mécanisme à fermeture automatique temporisée 1 comprend en outre un pot de temporisation 17 dont la partie supérieure est emboîtée sur la troisième partie inférieure 6 du boîtier cylindrique creux 2 et reliée de manière fluidique à celle-ci.

Un piston de temporisation 18 est disposé dans le pot de temporisation 17 de façon à pouvoir coulisser dans celui-ci, ledit piston de temporisation portant un second joint à lèvre 19 dont la lèvre 19a s'applique sur la surface latérale intérieure du pot de temporisation 17.

La deuxième partie intermédiaire 5 de type entretoise du boîtier cylindrique creux 2 comporte en partie supérieure des colonnes 5a qui permettent de retenir un troisième joint à lèvre 22 contre la première partie supérieure 4 de type corps de tête du boîtier cylindrique creux 2 et la tige de commande 3.

Des ouvertures d'entrée de fluide 20 sont ménagées en partie supérieure du pot de temporisation 17.

La surface latérale intérieure du pot de temporisation 17 comporte au moins une strie longitudinale 21 pour permettre une fuite de fluide calibrée entre la partie du pot de temporisation 17 au-dessous du second joint à lèvre 19 et la partie du pot de temporisation 17 au-dessus du second joint à lèvre 19 lors du déplacement du piston de temporisation 18 dans le pot de temporisation 17.

La partie inférieure du piston de temporisation 18 porte le second joint à lèvre 19, tandis que la partie supérieure du piston de temporisation 18 est insérée dans la partie inférieure de la tige de commande creuse 3 et possède deux éléments de verrouillage 23 emboîtés dans deux canaux d'entrée de fluide 14 opposés parmi les quatre canaux d'entrée de fluide 14 de la tige de commande 3.

Il est à noter que la partie supérieure du piston de temporisation 18 pourrait également comprendre trois ou quatre éléments de verrouillage 23 respectivement emboîtés dans trois ou quatre canaux d'entrée de fluide 14, sans s'écarter du cadre de la présente invention.

Chaque élément de verrouillage 23 est un élément à emboîtage élastique comprenant un montant flexible 23a portant une tête en porte-à-faux 23b, le montant flexible 23a étant configuré pour se déformer lors de l'introduction de la tête 23b dans la partie inférieure de la tige de commande creuse 3 et pour revenir ensuite à son état initial non déformé lors du passage de la tête 23b dans l'un des canaux radiaux d'entrée de fluide 14 de la tige de commande 3, ce qui permet de faciliter la fixation du piston de temporisation 18 sur la tige de commande 3. Préférablement, la tête 23b de l'élément de verrouillage 23 n'obstrue pas complètement le canal d'entrée de fluide 14 correspondant, de telle sorte qu'un écoulement de fluide peut se produire à travers les deux canaux d'entrée de fluide 14 dans lesquels les deux éléments de verrouillage 23 sont emboîtés.

La partie supérieure du second joint à lèvre 19 est insérée en partie dans une gorge 18a située à la base de la partie supérieure du piston de temporisation 18, ladite partie supérieure du second joint à lèvre 19 venant au contact de l'extrémité inférieure de la tige de commande 3 pour fermer de manière étanche l'extrémité inférieure de la tige de commande 3, de telle sorte que, lorsque le clapet 19 est fermé, aucun écoulement de fluide ne se produit à l'intérieur de la tige de commande creuse 3.

En outre, la partie inférieure du second joint à lèvre 19 est insérée en partie dans une gorge 18b située en partie inférieure du piston de temporisation 18, ce qui permet de garantir la fixation du second joint à lèvre 19 sur le piston de temporisation 18.

Le mécanisme à fermeture automatique temporisée 1 comprend en outre une vis de réglage de débit 24 disposée à l'intérieur de la tige de commande creuse 3.

La partie supérieure de la vis de réglage de débit 24 comprend un filetage externe 24a vissé dans un filetage interne 3c formé en partie supérieure de la tige de commande creuse 3.

Le bouton de commande de robinet 8 comporte un alésage central 8b en partie supérieure, ledit alésage central 8b étant bouché à l'aide d'un capuchon amovible 25. Le retrait du capuchon amovible 25 permet ainsi d'avoir accès à la vis de réglage de débit 24 de manière à pouvoir la dévisser/visser pour régler le débit de fluide.

La partie inférieure de la vis de réglage 24 est amincie de telle sorte que la partie médiane de ladite vis de réglage de débit 24 comporte une partie conique 24b au niveau des deux canaux de sortie de fluide 15 de la tige de commande 3, ladite partie conique 24b de la vis de réglage de débit 24 pouvant pénétrer dans la tige de commande 3 au-delà des canaux de sortie de fluide 15 jusqu'à atteindre un épaulement interne 3d de la tige de commande 3, permettant ainsi de réguler le passage de fluide dans la partie inférieure de la tige de commande 3 de manière à limiter le débit de fluide s'écoulant à travers les deux canaux de sortie de fluide 15. La vis de réglage 24 permet ainsi un réglage fin du débit de fluide en sortie du mécanisme 1 par vissage/dévissage manuel de celle-ci.

Un joint torique 26 est logé dans une gorge 24c ménagée dans la partie supérieure de la vis de réglage de débit 24, entre le filetage 24a et la partie médiane conique 24b, ce qui permet d'empêcher un passage de fluide vers le bouton de commande de robinet 8.

L'extrémité inférieure 24d (également appelée nez) de la vis de réglage de débit 24 se prolonge entre les deux éléments de verrouillage 23 du piston de temporisation 18, ce qui permet, quelle que soit la position de ladite vis de réglage de débit 24, d'empêcher le désengagement des deux éléments de verrouillage 23 et de garantir le verrouillage du piston de temporisation 18 sur la tige de commande 3.

Un filetage 27 est formé sur la surface latérale externe de la première partie supérieure 4 du boîtier cylindrique creux 2, de telle sorte que le mécanisme 1 de type cartouche puisse être vissé dans un corps de robinet.

Un joint torique 28 est disposé autour de la première partie supérieure 4 du boîtier cylindrique creux 2, au-dessus du filetage 27, de manière à garantir une étanchéité lorsque le mécanisme 1 de type cartouche est installé dans un corps de robinet.

Le mécanisme à fermeture automatique temporisée 1 peut ainsi être installé dans un robinet pour douche, lavabo ou urinoir, l'arrivée de fluide du robinet étant reliée de manière fluidique aux ouvertures d'entrée de fluide 20 ménagées dans le pot de temporisation 17, et la sortie de fluide du robinet étant reliée de manière fluidique aux ouvertures de sortie de fluide 7 ménagées dans la deuxième partie intermédiaire 5 de type entretoise du boîtier cylindrique creux 2.

Dans la position de repos du mécanisme à fermeture automatique temporisée 1, tel que représenté à la Figure 1, aucun appui n'est exercé sur le bouton de commande de robinet 8, de cette manière la tige de commande 3 est en position haute et le clapet 9 porté par la tige de commande 3 est fermé (c'est-à-dire, clapet 9 en butée contre le siège 10 formé sous la jupe 11 du boîtier cylindrique creux 2), de telle sorte qu'aucun écoulement de fluide ne se produit dans la tige de commande 3. En outre, en position de repos, le piston de temporisation 18 emboîté sur la tige de commande 3 est en position haute dans le pot de temporisation 17.

Un appui sur le bouton de commande de robinet 8 du mécanisme 1, tel que représenté à la Figure 2, entraîne la descente de la tige de commande 3 et l'ouverture du clapet 9, et entraîne également la descente du piston de temporisation 18 verrouillé sur la tige de commande 3 dans le pot de temporisation 17. Un écoulement de fluide peut alors se produire depuis les ouvertures d'entrée de fluide 20 vers les ouvertures de sortie de fluide 7, par l'intermédiaire successivement du pot de temporisation 17, des quatre canaux d'entrée de fluide 14 de la tige de commande 3, de l'intérieur de la tige de commande creuse 3, et des deux canaux de sortie de fluide 7 de la tige de commande 3.

Ensuite, lorsque l'appui sur le bouton de commande de robinet 8 est relâché, la tige de commande 3 remonte sous l'effet du ressort de rappel 12, de telle sorte que le piston de temporisation 18 remonte dans le pot de temporisation 17, en étant freiné par la lèvre 19a du second joint à lèvre 19, jusqu'à ce que le clapet 9 vienne en butée contre le siège 10. L'eau s'écoule ainsi jusqu'à ce que le clapet 9 se referme en position haute du piston de temporisation 18, le mécanisme 1 revenant alors dans sa position de repos.

La strie longitudinale 21 ménagée dans la surface intérieure du pot de temporisation 17 permet une fuite de fluide à la périphérie du second joint à lèvre 19 afin de permettre le retour du clapet 9 lorsque la pression sur le bouton de commande 8 est relâchée, la vitesse de retour du piston de temporisation 18 étant ainsi conditionnée par la vitesse de remplissage du pot de temporisation 17 induite par la section de la strie longitudinale 21, ce qui permet d'obtenir une fermeture automatique temporisée du mécanisme 1.

Il est bien entendu que le mode de réalisation particulier qui vient d'être décrit a été donné à titre indicatif et non limitatif, et que des modifications peuvent être apportées sans que l'on s'écarte pour autant de la présente invention qui est seulement définie par les revendications en annexe.

## Revendications

1. Mécanisme à fermeture automatique temporisée (1) pour un robinet, tel qu'un robinet pour douche, lavabo ou urinoir, ledit mécanisme comprenant:
- un boîtier cylindrique creux (2) à l'intérieur duquel est apte à coulisser axialement une tige de commande creuse (3), l'extrémité supérieure de la tige de commande (3) étant solidaire d'un bouton de commande de robinet (8), la partie inférieure de la tige de commande (3) débouchant du boîtier cylindrique creux (2) et portant un clapet (9) associé à un siège (10) constitué par la partie inférieure du boîtier cylindrique creux (2), le retour du clapet (9) sur son siège (10) étant provoqué par un ressort de compression (12) disposé entre le boîtier cylindrique creux (2) et le bouton de commande de robinet (8), la tige de commande creuse (3) possédant, en aval du clapet (9), au moins deux canaux radiaux d'entrée de fluide (14) et au moins un canal radial de sortie de fluide (15), un premier joint à lèvre (16) étant disposé entre le boîtier cylindrique creux (2) et la tige de commande (3), ledit premier joint à lèvre (16) étant situé en aval des au moins deux canaux d'entrée de fluide (14) et en amont de l'au moins un canal de sortie de fluide (15) ;
- un pot de temporisation (17) dont la partie supérieure est emboîtée sur la partie inférieure du boîtier cylindrique creux (2) et reliée de manière fluidique à celle-ci, un piston de temporisation (18) qui porte un second joint à lèvre (19) dont la lèvre (19a) s'applique sur la surface latérale intérieure du pot de temporisation (17) étant apte à coulisser dans le pot de temporisation (17), ledit pot de temporisation (17) étant configuré pour être relié à une arrivée de fluide du robinet par l'intermédiaire d'au moins une ouverture d'entrée de fluide (20) ménagée dans le pot de temporisation (17), la surface latérale intérieure du pot de temporisation (17) comportant une strie longitudinale (21) pour permettre une fuite de fluide calibrée entre la partie du pot de temporisation (17) au-dessous du second joint à lèvre (19) et la partie du pot de temporisation (17) au-dessus du second joint à lèvre (19) lors du déplacement du piston de temporisation (18), , second joint à lèvre (19) porté par le piston de temporisation (18) comportant une partie supérieure insérée en partie dans une gorge (18a) située à la base de la partie supérieure du piston de temporisation (18),
- au moins une ouverture de sortie de fluide (7) ménagée dans le boîtier cylindrique creux (2) en aval du premier joint à lèvre (16) et permettant un écoulement de fluide vers une sortie de fluide du robinet ; et
- une vis de réglage de débit (24) disposée à l'intérieur de la tige de commande creuse (3), la partie médiane de ladite vis de réglage de débit (24) comportant une partie conique (24b) configurée pour réguler le passage de fluide dans la partie inférieure de la tige de commande creuse (3) de manière à limiter le débit de fluide s'écoulant à travers l'au moins un canal de sortie de fluide (15)
**caractérisé en ce que**:
la partie supérieure du piston de temporisation (18) est insérée dans la partie inférieure de la tige de commande creuse (3) et possède au moins deux éléments de verrouillage (23) emboîtés dans les au moins deux canaux d'entrée de fluide (14) de la tige de commande (3), et **en ce que**
ladite partie supérieure du second joint à lèvre (19) vient au contact de l'extrémité inférieure de la tige de commande (3) pour fermer de manière étanche l'extrémité inférieure de la tige de commande (3).

2. Mécanisme à fermeture automatique temporisée (1) selon la revendication 1, **caractérisé par le fait que** l'extrémité inférieure (24d) de la vis de réglage de débit (24) pénètre entre les au moins deux éléments de verrouillage (23) du piston de temporisation (18) de manière à empêcher le désengagement des au moins deux éléments de verrouillage (23) et à assurer la solidarité du piston de temporisation (18) avec la tige de commande (3).

3. Mécanisme à fermeture automatique temporisée (1) selon la revendication 1 ou 2, **caractérisé par le fait que** chacun des au moins deux éléments de verrouillage (23) est un élément à emboîtage élastique configurée pour se déformer lors de son introduction dans la partie inférieure de la tige de commande creuse (3) et pour revenir ensuite à son état initial non déformé lors de son clipsage dans le canal radial d'entrée de fluide (14) correspondant de la tige de commande creuse (3).

4. Mécanisme à fermeture automatique temporisée (1) selon l'une des revendications 1 à 3, **caractérisé par le fait que** la tige de commande (3) comprend quatre canaux radiaux d'entrée de fluide (14), et le piston de temporisation (18) comprend deux éléments de verrouillage (23) emboîtés dans deux canaux opposés parmi les quatre canaux radiaux d'entrée de fluide (14).

5. Mécanisme à fermeture automatique temporisée (1) selon l'une des revendications 1 à 4, **caractérisé par le fait que** la tige de commande (3) comprend deux canaux radiaux de sortie de fluide (15).

6. Mécanisme à fermeture automatique temporisée (1) selon l'une des revendications 1 à 5, **caractérisé par le fait que** le siège (10) est constitué par une jupe (11) formée en partie inférieure du boîtier cylindrique creux (2).

7. Mécanisme à fermeture automatique temporisée (1) selon l'une des revendications 1 à 6, **caractérisé par le fait que** le clapet (9) est un joint torique disposé dans une gorge (3b) formée au niveau de la partie inférieure de la tige de commande (3).

8. Mécanisme à fermeture automatique temporisée (1) selon l'une des revendications 1 à 7, **caractérisé par le fait que** le boîtier cylindrique creux (2) est formé en trois parties, à savoir une première partie supérieure (4) dans laquelle sont montées la tige de commande (3) et le ressort de compression (12), une deuxième partie intermédiaire (5) dans laquelle est formée l'au moins une ouverture de sortie de fluide (7) et dans laquelle est disposé le premier joint à lèvre (16), et une troisième partie inférieure (6) sur laquelle est formé le siège (10).

9. Robinet pour douche, lavabo ou urinoir intégrant un mécanisme à fermeture automatique temporisée (1) selon l'une des revendications 1 à 8.

## Patentansprüche

1. - Zeitgesteuerter automatischer Schließmechanismus (1) für einen Hahn wie z. B. einen Hahn für eine Dusche, ein Waschbecken oder Urinal, wobei der Mechanismus Folgendes umfasst:
- ein hohles zylindrisches Gehäuse (2), in dessen Inneren eine hohle Steuerstange (3) ausgelegt ist, um axial zu gleiten, wobei das obere Endes der Steuerstange (3) fest mit einem Hahnsteuerknopf (8) verbunden ist, wobei der untere Teil der Steuerstange (3) aus dem hohlen zylindrischen Gehäuse (2) mündet und eine Klappe (9) trägt, die mit einem Sitz (10) assoziiert ist, die aus dem unteren Teil des hohlen zylindrischen Gehäuses (2) besteht, wobei die Rückkehr der Klappe (9) auf ihren Sitz (10) durch eine Druckfeder (12) hervorgerufen wird, die zwischen dem hohlen zylindrischen Gehäuse (2) und dem Hahnsteuerknopf (8) angeordnet ist, wobei die hohle Steuerstange (3) nachgelagert von der Klappe (9) mindestens zwei radiale Fluideintrittskanäle (14) und mindestens einen radialen Fluidaustrittskanal (15) aufweist, wobei eine erste Lippendichtung (16) zwischen dem hohlen zylindrischen Gehäuse (2) und der Steuerstange (3) angeordnet ist, wobei die erste Lippendichtung (16) nachgelagert von den mindestens zwei Fluideintrittskanälen (14) und vorgelagert von dem mindestens einen Fluidaustrittskanal (15) angeordnet ist;
- ein Timerkästchen (17), dessen oberer Teil auf dem unteren Teil des hohlen zylindrischen Gehäuses (2) eingefügt und auf fluidische Weise mit diesem verbunden ist, einen Timerkolben (18), der eine zweite Lippendichtung (19) trägt, deren Lippe (19a) auf die innere seitliche Fläche des Timerkästchens (17) aufgebracht ist und dazu ausgelegt ist, im Timerkästchen (17) zu gleiten, wobei das Timerkästchen (17) konfiguriert ist, um mit einem Fluideinlauf des Hahns mit Hilfe von mindestens einer Fluideintrittsöffnung (20) verbunden zu sein, die im Timerkästchen (17) angebracht ist, wobei die innere seitliche Fläche des Timerkästchens (17) eine längs gerichtete Rille (21) umfasst, um ein Auslaufen von Fluid zu ermöglichen, das zwischen dem Teil des Timerkästchens (17) unter der zweiten Lippendichtung (19) und dem Teil des Timerkästchens (17) über der zweiten Lippendichtung (19) bei der Verschiebung des Timerkolbens (18) kalibriert wird, wobei die zweite Lippendichtung (19), getragen vom Timerkolben (18), einen oberen Teil umfasst, der teilweise in eine Nut (18a) eingeführt ist, die sich an der Basis des oberen Teils des Timerkolbens (18) befindet,
- mindestens eine Fluidausgangsöffnung (7), die in dem hohlen zylindrischen Gehäuse (2) nachgelagert von der ersten Lippendichtung (16) angebracht ist und ein Auslaufen von Fluid hin zu einem Fluidausgang des Hahns ermöglicht; und
- und eine Durchsatzeinstellschraube (24), die im Inneren der hohlen Steuerstange (3) angeordnet ist, wobei der mittlere Teil der Durchsatzeinstellschraube (24) einen konischen Teil (24b) umfasst, der konfiguriert ist, um den Durchgang von Fluid im unteren Teil der hohlen Steuerstange (3) einzustellen, um den Durchsatz von Fluid, der über mindestens den einen Fluidausgangskanal (15) abläuft, zu begrenzen,
**dadurch gekennzeichnet, dass**:
der obere Teil des Timerkolbens (18) in den unteren Teil des hohlen Steuerstange (3) eingeführt ist und mindestens zwei Verriegelungselemente (23) aufweist, die in die mindestens zwei Fluideintrittskanäle (14) der Steuerstange (3) eingefügt sind, und dadurch, dass
der obere Teil der zweiten Lippendichtung (19) in Kontakt mit dem unteren Ende der Steuerstange (3) kommt, um auf dichte Weise das untere Ende der Steuerstange (3) zu schließen.

2. - Zeitgesteuerter automatischer Schließmechanismus (1) nach Anspruch 1, **dadurch gekennzeichnet, dass** das untere Ende (24d) der Durchsatzeinstellschraube (24) zwischen die mindestens zwei Verriegelungselemente (23) des Timerkolbens (18) eindringt, um die Loslösung der mindestens zwei Verriegelungselemente (23) zu verhindern und die feste Verbindung des Timerkolbens (18) mit der Steuerstange (3) sicherzustellen.

3. - Zeitgesteuerter automatischer Schließmechanismus (1) nach Anspruch 1 oder 2, **dadurch gekennzeichnet, dass** jedes der mindestens zwei Verriegelungselemente (23) ein Element mit automatischer Einfügung ist, das konfiguriert ist, um sich bei seiner Einfügung in den unteren Teil der hohlen Steuerstange (3) zu verformen, und um anschließend in seinen nicht verformten ursprünglichen Zustand beim Klipsen in den entsprechenden radialen Fluideintrittskanal (14) der hohlen Steuerstange (3) zurückzukehren.

4. - Zeitgesteuerter automatischer Schließmechanismus (1) nach einem der Ansprüche 1 bis 3, **dadurch gekennzeichnet, dass** die Steuerstange (3) vier radiale Fluideintrittskanäle (14) umfasst und der Timerkolben (18) zwei Verriegelungselemente (23) umfasst, die in zwei einander gegenüberliegende Kanäle aus den vier radialen Fluideintrittskanälen (14) eingefügt sind.

5. - Zeitgesteuerter automatischer Schließmechanismus (1) nach einem der Ansprüche 1 bis 4, **dadurch gekennzeichnet, dass** die Steuerstange (3) zwei radiale Fluidausgangskanäle (15) umfasst.

6. - Zeitgesteuerter automatischer Schließmechanismus (1) nach einem der Ansprüche 1 bis 5, **dadurch gekennzeichnet, dass** der Sitz (10) aus einer Schürze (11) besteht, die im unteren Teil des hohlen zylindrischen Gehäuses (2) gebildet ist.

7. - Zeitgesteuerter automatischer Schließmechanismus (1) nach einem der Ansprüche 1 bis 6, **dadurch gekennzeichnet, dass** die Klappe (9) eine O-Ring-Dichtung ist, die in einer Aussparung (3b) angeordnet ist, die auf der Ebene des unteren Teils der Steuerstange (3) gebildet ist.

8. - Zeitgesteuerter automatischer Schließmechanismus (1) nach einem der Ansprüche 1 bis 7, **dadurch gekennzeichnet, dass** das hohle zylindrische Gehäuse (2) aus drei Teilen gebildet ist, d. h. einem ersten oberen Teil (4), in dem die Steuerstange (3) und die Druckfeder (12) montiert sind, einem zweiten Zwischenteil (5), in dem mindestens eine Fluidausgangsöffnung (7) gebildet ist, und in dem die erste Lippendichtung (16) angeordnet ist, und einem dritten unteren Teil (6), in dem der Sitz (10) gebildet ist.

9. - Hahn für Dusche, Waschbecken oder Urinal, der einen zeitgesteuerten automatischen Schließmechanismus (1) nach einem der Ansprüche 1 bis 8 einschließt.

## Claims

1. - A mechanism with automatic timed locking (1) for a tap, such as a shower, sink or urinal tap, said mechanism comprising:
- a hollow cylindrical housing (2) inside which a hollow control rod (3) is able to slide axially, the upper end of the control rod (3) being secured to a tap control button (8), the lower part of the control rod (3) emerging from the hollow cylindrical housing (2) and carrying a valve (9) associated with a seat (10) made up of the lower part of the hollow cylindrical housing (2), the return of the valve (9) onto its seat (10) being caused by a compression spring (12) arranged between the hollow cylindrical housing (2) and the tap control button (8), the hollow control rod (3) having, downstream of the valve (9), at least two radial fluid inlet channels (14) and at least one radial fluid outlet channel (15), a first lip seal (16) being arranged between the hollow cylindrical housing (2) and the control rod (3), said first lip seal (16) being located downstream of the at least two fluid inlet channels (14) and upstream of the at least one fluid outlet channel (15);
- a timing box (17) whose upper part is fitted on the lower part of the hollow cylindrical housing (2) and fluidically connected thereto, a timing piston (18) that carries a second lip seal (19) whose lip (19a) presses on the inner lateral surface of the timing box (17) being able to slide in the timing box (17), said timing box (17) being configured to be connected to a fluid intake of the tap by means of at least one fluid inlet opening (20) arranged in the timing box (17), the inner lateral surface of the timing box (17) including a longitudinal streak (21) to allow a calibrated fluid leak between the part of the timing box (17) below the second lip seal (19) and the part of the timing box (17) above the second lip seal (19) when the timing piston (18) moves, the second lip seal (19) carried by the timing piston (18) including an upper part partially inserted into a groove (18a) located at the base of the upper part of the timing piston (18),
- at least one fluid outlet opening (7) arranged in the hollow cylindrical housing (2) downstream of the first lip seal (16) and allowing fluid to flow toward the fluid outlet of the tap; and
- a flow adjustment screw (24) arranged inside the hollow control rod (3), the median part of said flow adjustment screw (24) including a conical part (24b) configured to adjust the passage of fluid in the lower part of the hollow control rod (3) so as to limit the flow of fluid flowing through the at least one fluid outlet channel (15);
**characterized in that**:
the upper part of the timing piston (18) is inserted into the lower part of the hollow control rod (3) and has at least two locking elements (23) fitted in the at least two fluid inlet channels (14) of the control rod (3), and **in that**
said upper part of the second lip seal (19) comes into contact with the lower end of the control rod (3) to tightly close the lower end of the control rod (3).

2. - The mechanism with automatic timed locking (1) according to claim 1, **characterized in that** the lower end (24d) of the flow adjusting screw (24) penetrates between the at least two locking elements (23) of the timing piston (18) so as to prevent the disengagement of the at least two locking elements (23) and to ensure the securing of the timing piston (18) with the control rod (3).

3. - The mechanism with automatic timed locking (1) according to claim 1 or 2, **characterized in that** each of the at least two locking elements (23) is an elastic interlocking element configured to deform when it is introduced into the lower part of the hollow control rod (3) and then to return to its initial undeformed state when it is clipped in the corresponding radial fluid inlet channel (14) of the hollow control rod (3).

4. - The mechanism with automatic timed locking (1) according to one of claims 1 to 3, **characterized in that** the control rod (3) comprises four radial fluid inlet channels (14), and the timing piston (18) comprises two locking elements (23) fitted in two opposite channels among the four radial fluid inlet channels (14).

5. - The mechanism with automatic timed locking (1) according to one of claims 1 to 4, **characterized in that** the control rod (3) comprises two radial fluid outlet channels (15).

6. - The mechanism with automatic timed locking (1) according to one of claims 1 to 5, **characterized in that** the seat (10) is made up of a skirt (11) formed in the lower part of the hollow cylindrical housing (2).

7. - The mechanism with automatic timed locking (1) according to one of claims 1 to 6, **characterized in that** the valve (9) is an O-ring arranged in a groove (3b) formed at the lower part of the control rod (3).

8. - The mechanism with automatic timed locking (1) according to one of claims 1 to 7, **characterized in that** the hollow cylindrical housing (2) is formed in three parts, namely a first upper part (4) in which the control rod (3) and the compression spring (12) are mounted, a second intermediate part (5) in which the at least one fluid outlet (7) is formed and in which the first lip seal (16) is arranged, and a third lower part (6) on which the seat (10) is formed.

9. - A tap for a shower, sink or urinal incorporating a mechanism with automatic timed locking (1) according to one of claims 1 to 8.
